# EUROPEAN PATENT SPECIFICATION

(11) **EP 1 303 564 B1**
(45) Date of publication and mention of the grant of the patent: **10.03.2004**
(21) Application number: 01962795.9
(22) Date of filing: 28.06.2001
(51) Int. Cl.: C08K 5/00, C08L 27/06

(54) **STABILISER SYSTEM COMPRISING HYDROXYACIDS**
STABILISATORENSYSTEM, DAS HYDROXYSÄUREN ENTHÄLT
SYSTEME STABILISATEUR COMPRENANT DES HYDROXYACIDES

(30) Priority: 14.07.2000 EP 00202512; 24.10.2000 US 242953 P
(43) Date of publication of application: 23.04.2003
(73) Proprietor: Akzo Nobel N.V., 6824 BM Arnhem (NL)
(72) Inventor: HARVEY, Heather, Blue, NL-6882 BX Velp (NL); HUISMAN, Hendrik, Willem, NL-6367 BZ Voerendaal (NL); KLAESS, Peter, 07973 Greiz (DE)
(74) Representative: Schalkwijk, Pieter Cornelis
(86) International application number: PCT/EP2001/007414
(87) International publication number: WO 2002/006389

(56) References cited:
- EP-A- 0 273 766
- GB-A- 1 554 513
- US-A- 4 380 597
- US-A- 5 124 373
- DATABASE WPI Section Ch, Week 197609 Derwent Publications Ltd., London, GB; Class A14, AN 1976-16061X XP002186213 & JP 51 006247 A (SUMITOMO CHEM CO LTD), 19 January 1976 (1976-01-19)
- CHEMICAL ABSTRACTS, vol. 84, no. 18, 3 May 1976 (1976-05-03) Columbus, Ohio, US; abstract no. 122851, XP002186212 & JP 75 154346 A (KYODO CHEMICALS) 12 December 1975 (1975-12-12)

## Description

Many articles are made by moulding, extruding, calendering, and casting of (co)polymers. These processes involve heating the (co)polymer. At conventional processing temperatures these (co)polymers are known to undergo considerable degradation, which is known to result in an adverse colour change and an adverse effect on the mechanical properties of the end product.

Historically, to overcome such problems, particularly in vinyl chloride-containing (co)polymers, Pb, Ba and/or Cd salts have been added as a stabiliser. However, the toxicity and/or environmental impact of these metals is a concern and in many applications alternative stabiliser systems were sought that do not contain these heavy metals. Many of these more recent stabiliser systems are designed around Ca and/or Zn compounds. Because these Ca and/or Zn compounds typically are not as effective as the heavy metal-based species, very often the performance, in retarding the degradation of the polymer, is to be enhanced by the further addition of co-stabilising additives such as organophosphites, epoxidised esters or oils, hindered phenolic antioxidants, polyols, hydrotalcites, zeolites, β-diketone-type products, (β)-aminocrotonates, lime, dihydropyridines, etc. More information can be found in, for instance, *Plastics Additives,* R. Gächter/H. Müller, Carl Hanser Verlag, 4^{th} edition, 1993.

United States Patents 2,307,075 and 2,669,548 describe the beneficial effects of adding metal chelates of dicarbonyl compounds to the PVC, whereas GB 1 511 621 describes further improvements offered by a stabilising composition comprising divalent metal salts of carboxylic acids together with a dicarbonyl organic compound. In German OS 1 694 873, the use of a purely organic system based on uracils is disclosed. This system has many advantages but also a noticeable disadvantage in that it cannot be used without the addition of a stabiliser giving long-term colour control, also known as primary stabilisation.

Especially when more demanding processing conditions were applied, e.g., using temperatures of 180-200°C, the performance was insufficient.

The desire to have metal-free stabilising systems has grown in recent times. In EP-A-0 768 336, for example, the uracils of German OS 1 694 873 are combined with known long-term (primary) stabilisers.

It is noted that in earlier work, such as GB 1 554 513, hydroxycarboxylates were used in a treatment of PVC in order to achieve a purified PVC that required the addition of fewer stabilisers to get proper stability. The treatment required the slurrying of the PVC in a methanol and/or water medium containing the hydroxycarboxylates at elevated temperatures. The hydroxycarboxylates are used in such an amount that any HCl that is present or formed during the treatment step is neutralised. Adding more than this amount was said to lead to deterioration of the initial colour and the long-term heat stability. Hence, such a treatment does not lead to a PVC composition comprising the hydroxycarboxylates.

The present invention seeks to provide an alternative stabilising system that can be compounded in a conventional manner with a (co)polymer to be stabilised. Preferably the resulting stabilised (co)polymer composition shows good colour and heat stability, low volatility and plate-out when processed to form articles, even at higher temperatures (up to 220°C). More preferably, the various ingredients of the composition allow the manufacture of food-grade articles, meaning that all ingredients have been approved for use in articles that come into contact with food. Even more preferably, the ingredients are allowed to be used for the stabilisation of PVC articles that come into contact with drinking water. Most preferably, the stabilising system according to the invention is free of heavy metal.

Surprisingly, we have found that a good stabiliser system can be based on a combination of one or more salts of one or more specific hydroxycarboxylic acids and one or more colour stabilisers. Such a combination provides not only good initial colour but also good heat stability. Preferred compositions also show no plate-out when processed and contain ingredients from renewable resources which are permitted in food-grade and/or drinking water-grade PVC.

The hydroxycarboxylic acid salts that can be used must have fewer than 4 hydroxy groups and fewer than 10 carbon atoms in the molecule, are of the conventional type, and include (meaning that they are not limited to) the salts of malic acid, α-methyl malic acid, glycollic acid, tartaric acid, α-methyl tartaric acid, tartronic acid, lactic acid, β-hydroxy propionic acid, citric acid, glyceric acid, monohydroxy butanoic acids, mono- and di-hydroxy pentanoic acids, tartronic acid, ribosic acid, mono- and di-hydroxy cinnamic acid, trihydroxy succinic acid, 1,2-dihydroxy-1,1,2-ethanetricarboxylic acid, hydroxy glutaric acid, hydroxy adipates, and mixtures thereof. Hydroxycarboxylic acid salts with more than 10 carbon atoms were found not to be as effective in stabilising PVC. Also, they are less economic. Preferably, the hydroxycarboxylic acids are aliphatic. More preferably, the hydroxycarboxylic acid contains fewer than 9 carbon atoms, most preferably fewer than 8 carbon atoms. Compounds with four or more hydroxy groups were found to be less active. Most preferably, hydroxycarboxylic acids with one or two hydroxy groups are used. Optionally, the hydroxy acids may contain one or more of the aldehyde, keto, acyl, amino, aminoalkyl, aminoaryl, and/or halogen moieties.

If the acid contains two or more acid groups, at least one of them is in the salt form. However, it is preferred to have all acid groups in the salt form. The salts are preferably of Li, K, Na, Ca, Mg, Ba, Sr, Al, Fe, La, Ce, Mn, and/or Zn. More preferably, the salts do not comprise any heavy metal (with a specific gravity greater than four). Most preferably, they are the salts of a non-heavy metal and a synthetic or natural acid from a natural, renewable, resource, such as fruit acids.

In a preferred embodiment, the hydroxycarboxylic acid salt is chosen such that it is stable at the conditions used for processing the (co)polymer. More specifically, most hydroxycarboxylic acid salts will have water associated with them. Upon heating said water-containing salts, the water that was bound will typically be released at a certain temperature. This decomposition temperature typically is already known. However, if it is not known, it can easily be checked by using conventional thermo-gravimetric analysis methods, where the weight and the temperature of a sample are recorded while heating a sample. If the salt decomposes during compounding with the (co)polymer and/or processing of the compound, plate-out can be observed. Also, the resulting stabilised (co)polymer has reduced heat and/or colour stability. Because flexible grades of (co)polymer are typically processed at lower temperatures than, for instance, rigid materials, the optimum stabiliser system for flexibles may differ from the optimum stabiliser for rigids. For example, it was observed that potassium citrate, which decomposes at about 180°C, in combination with a colour stabiliser, showed acceptable performance in flexible PVC processed at a maximum of 160°C, whereas it showed unacceptable performance in rigid PVC processed at 190°C. Alternatively, it is possible, and often desirable, not to employ thermo-gravimetric analysis but to simply determine the performance of a certain salt, or of certain salts, in the conventional way, i.e. by compounding them with the (co)polymer, and to check the performance during processing and the properties of the stabilised polymer.

The amount of hydroxycarboxylic acid salts that is to be added to the PVC in order to obtain the desired stabilising effect is dependent on the PVC grade used, the additives used, the process conditions used to make the finished PVC article, and the demands of said finished article. Preferably, an effective stabilising amount is used. In general, this means that an amount of 0.01-10 parts is used per 100 parts of (co)polymer to be stabilised. It is noted that throughout this document the word "parts" means parts by weight and that the abbreviation "phr" is used for the expression "parts per 100 parts of (co)polymer." Preferably, an amount of 0.05-7 phr, more preferably 0.1-4 phr, even more preferably 0.2-2 phr, most preferably about 0.5-1.5 phr is used.

The colour-stabiliser that forms the other essential part of the stabiliser system according to the invention can be selected from one or more conventional colour stabilisers. Preferred colour stabilisers are nitrogen-containing stabilisers, such as (thio)uracils of formula 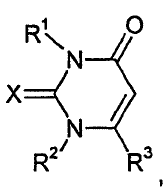 wherein X is S or O, O being preferred, and R¹, R², R³ are independently selected from the group consisting of H, OH, alkyl, aryl, aralkyl, alkaryl, acyl, amino, aminoalkyl, aminoaryl, hydrazino, and halogen, NH₂ being preferred for R³, including preferred products like 6-amino-1,3-dimethyl uracil and 6-phenylamino-1,3-dimethyl uracil; (β-)aminocrotonates; dicyandiamide; melamine; urea; guanidine; formoguanamide, N-substituted maleimides, and hydantoin. Other suitable colour stabilisers are dihydropyridines, dihydroacetic acid, α-phenyl indole, and β-diketones, and mixtures thereof. If β-diketones are used, they are typically used in combination with a small amount of Lewis acid, such as Zn, to improve their efficiency. For of this reason, β-diketones are less desirable compounds. It is noted that also (β-)aminocrotonates may benefit from the addition of small amounts of Lewis acid. Preferred stabiliser compositions are free of any heavy metal and are based on renewable resources. Furthermore, they are preferably food- (and drinking water-application) approved. More preferred colour stabilisers include said uracils, dicyandiamide, (β-)aminocrotonates, dihydropyridines, and α-phenyl indole.

The amount of colour stabiliser to be used is dependent on the PVC grade used, the additives used, the process conditions used to make the finished PVC article, and the demands of said finished article. Preferably, an effective stabilising amount is used. In general, this means that an amount of 0.01-15 phr, preferably 0.02-10 phr, more preferably 0.03-5 phr, and most preferably 0.05-2.5 phr is used. If more than one colour stabiliser is used, the total amount of all colour stabiliser preferably is within said ranges.

It is to be noted that the term (co)polymer is meant to denominate compositions comprising any homopolymer or copolymer. However, (co)polymers comprising vinyl chloride or polyvinyl chloride (PVC), including chlorinated vinyl chloride polymers, are preferably stabilised with the stabiliser system of the present invention. Most preferred are conventional PVC grades that are not chlorinated and typically comprise more than 90% vinyl chloride, as are obtainable by mass, suspension, micro-suspension, and emulsion polymerisation processes. These most preferred vinyl chloride (co)polymers include conventional flexible, semi-rigid, and rigid grades of PVC.

In order to further improve the colour of the PVC stabilised with hydroxyacids and colour stabiliser, it can be beneficial to include one or more (strong) oxidising agents of the conventional type. Suitably one or more oxidising agents are used that are selected from the group consisting of Li, K, Na, Ca, Mg, Ba, Sr, Zn, Al, La or Ce perborates, perchlorates, persulfates, and/or percarbonates, as well as peroxides, including inorganic peroxides like CaO₂, organic hydroperoxides, and peroxyacids, including perlauric acid and metachloro perbenzoic acid. Care is to be taken that the oxidising compounds do not fully decompose during the initial processing of the PVC, so that a sufficient amount is left to be active during the formation of the finished PVC article. Preferably, the strong oxidising agent is used in such an amount that there is no residual oxidising agent in the finished article. In view of safety considerations, the oxidising agents may be used in a "dissolved" form where they are (pre)mixed with one or more of the other ingredients of the stabiliser composition. Most preferred is the use of one or more perchlorates, such as potassium and sodium perchlorate. They may be used in the pure, hydrated, or dissolved form, depending on the circumstances. Suitably, the oxidising agent, or combination of oxidising agents, is used in an amount of 0-5 %w/w, preferably 0-2 %w/w.

Optionally, the PVC compounds comprise conventional adjuvants employed to facilitate processing or to enhance the properties of the end product. Examples of such optional adjuvants include organophosphite esters, anti-oxidants, ultraviolet absorbers, polyols, zeolites, hydrotalcites, antistatic agents, lubricants, flame retardants, plasticisers, flow and impact modifiers, epoxy resins, fillers, and pigments.

Organophosphite esters include for example triaryl phosphites such as triphenyl phosphite, tris(nonylphenyl)phosphite, tris(2,4-di-t-butylphenyl)phosphite, alkaryl phosphites such as monooctyl diphenyl phosphite, dioctylphenyl phosphite, mixed alkyl nonylphenyl phosphites, trialkyl phosphites such as tridecyl phosphite, trioleyl phosphite, tristearyl phosphite, oligo phosphites such as those based on pentaerythritol, dipropylene glycerol, and bisphenols.

Antioxidants are, for example, phenolic antioxidants such as 2,6-di-tert-butyl-4-methylphenol, 2,2'-methylene bis(4-methyl-6-tert-butylphenol), 4,4'-thio-bis(2-tert-buty(-5-methyl-phenol), tetrakismethylene (3,5-di-tert-butyl-4-hydroxyhydrocinnamate) methane, 2,2'-thiodiethyl bis(3,5-di-tert-butyl-4-hydroxyphenyl) propionate, 2,2'-bis(4-hydroxyphenol) propane, octadecyl-3-(3',5'-di-tert-butyl-4-hydroxyphenol) propionate, and pentaerythritol tetrakis [3',5'-di-tert-butyl-4-hydroxyphenol)propionate]; phosphites like tris(2,4-di-tert-butyl-phenyl) phosphite, bis(2,4-di-tert-butyl-phenyl) pentaerythritol diphosphite, and tris(p-nonylphenyl) phosphite; and thioesters such as di-lauryl-3,3'-thiodipropionate and as di-stearyl-3,3'-thiodipropionate.

Ultraviolet absorbers, for example benzophenones such as 2-hydroxy-4-methoxybenzophenone, 2-hydroxy-4-octoxybenzophenone, benzotriazoles such as 2-(2'-hydroxy-5'-methylphenyl)benzotriazole, salicylates such as phenyl salicylate, acrylates, such as α-cyano-β,β'-diphenylacrylic acid isooctylester, triazines, such as 2,4,6-tris(2-hydroxy-4-octyloxyphenyl)-1,3,5-triazine, nickel salts such as nickel bis(octylphenyl sulphide) and nickel bis[O-ethyl(3,5-di-t-butyl-4-hydroxybenzyl)] phosphate, and hindered amines such as bis(2,2,6,6-tetramethylpiperidinyl-4) sebacate, thiodipropionic acid-bis(2,2,6,6-tetramethyl-4-piperidinyl)ester, and poly-methylpropyl-3-oxy-[4(2,2,6,6-tetramethyl) piperidinyl] siloxane.

Conventional co-stabilisers that can be used include polyols, such as pentaerythritol, dipentaerythritol, tris(hydroxyethyl) isocyanurate, mannitol, sorbitol, trimethylol propane, glycerol, propylene glycol, di-trimethylol propane, and the esters of these products formed with aliphatic and/or aromatic monocarboxylic or dicarboxylic acids; epoxy resins; and acid scavengers such as zeolites, hydrotalcites, dawsonites, hydrocalumites, metal (bi)carbonates, metal oxides, metal hydroxides, such as lime, and mixed metal salts, e.g., the types comprising phosphites, such as CaAl hydroxyphosphites, and phosphates.

Typical examples of suitable antistatic agents are ethylene oxide condensates, carbowax, glycerol monostearate, quaternary ammonium salts, alkanol amides, and alkyl sulphonates.

Suitable lubricants are of the conventional internal and/or external type, including fatty acid esters and amides, such as distearyl phthalate and sorbitol-1,6-bis-(C₁₂ - C₂₂ fatty acid) esters, fatty alcohols, such as stearyl alcohol, stearic acid, waxes, such as (oxidised) polyethylene wax, paraffin wax, and amide wax, glycerol esters, or metal soaps, such as calcium, zinc or aluminium carboxylates.

Flame-retardants include compounds such as antimony trioxide, aluminium hydroxytrihydrate, borates, mixed metal hydroxycarbonates, and zinc stannate.

Plasticisers are typically used, particularly in semi-rigid and flexible grade PVC compositions. Commonly used plasticisers include, for example, chloroparaffins; phthalic acid esters such as dimethyl phthalate, dibutyl phthalate, dioctyl phthalate, diisodecyl phthalate; aliphatic monobasic acid esters such as butyl oleate, glycerol monoleate, butyl stearate, octyl stearate, butyl epoxy stearate, and octyl epoxy stearate; epoxidised soybean oil; epoxidised linseed oil; aliphatic acid esters such as diisodecyl adipate, dioctyl adipate, dibutyl adipate, succinic acid esters, trimellitic acid esters, and citric acid esters; higher-molecular weight (polymeric plasticisers) based on dibasic acids; and phosphoric acid esters such as tributyl phosphate, triphenyl phosphate, and tri-2-ethylhexyl phosphate.

Flow and impact modifiers that can be used, particularly in rigid PVC formulations, include, for example, chlorinated polyethylene; butadiene/styrene co-polymers; butadiene/styrene/acrylonitrile terpolymers; and conventional acrylate-based modifiers, including (co)polymers of (meth)acrylic acid esters.

Miscellaneous additives such as fillers and pigments can be used in both flexible and rigid polymer applications. Suitable fillers may be selected from chalk, kaolin, China clay, talc, silicates, glass fibres, glass spheres, wood meal, metal oxides, metal hydroxides, and carbon blacks, including soot, and graphite.

In a preferred embodiment, the stabiliser composition comprises a salt of a hydroxycarboxylic acid with fewer than 4 hydroxy groups and fewer than 10 carbon atoms and two or more colour stabilisers, at least one of them being a nitrogen-containing stabiliser, such as dicyandiamide. In a more preferred embodiment, the stabiliser composition comprises a salt of a hydroxycarboxylic acid, a first colour stabiliser, dicyandiamide, and an oxidising agent.

If so desired, the stabilisers according to the invention can be incorporated into the PVC separately from or together with the other adjuvants. In the former case, the stabilising system is preferably added as such. In the latter case, it is advantageous to use a mixture of the stabilisers and said adjuvants to produce a stabiliser formulation, a so-called one-pack, which can then be incorporated into the (co)polymer. Methods of production of such stabilising formulations are well known within the industry. Accordingly, the stabiliser system according to the present invention will comprise 0.05-70 % by weight (%w/w) of hydroxycarboxylic acid salt, 0.02-40 %w/w of colour stabiliser, and 0 - 94 %w/w of one or more additives, based on the total weight of the stabiliser formulation, up to a total of 100 %w/w. Preferred compositions comprise 0.05-70 %w/w of hydroxycarboxylic acid salt, 0.02-40 %w/w of colour stabiliser, 0.01-5 %w/w of oxidising agent, and 0 - 94 %w/w of one or more adjuvants, based on the total weight of the stabiliser formulation, up to a total of 100 %w/w.

Various methods are available for the processing of stabilised PVC formulations. These include calendering, rotational moulding, spread coating, slush moulding, extrusion, injection moulding, blow moulding. The stabiliser compositions described by the invention can be used in accordance with each of these techniques.

The present invention is elucidated by the following examples.

| Experimental | |
|---|---|
| Chemicals used: | |
| dicyandiamide | dicyandiamide C1 ex NVCP |
| epoxidised soybean oil | Lankroflex® E2307 ex Akcros |
| epoxidised fatty acid ester | Lankroflex® ED6 ex Akcros |
| uracil | 6-amino-1,3-dimethyluracil ex Boehringer Ingelheim |
| TiO₂ pigment | Kronos® 2220 ex Kronos GmbH |
| chalk | Omyalite® 95T ex Omya |
| stearic acid | Pristerene® 4912 ex Unichema |
| process aid | Paraloid® K120N ex Rohm & Haas |
| β-amino crotonate | Lonza® BGAC ex Lonza |
| hydrotalcite | Alkamiser I ex Kyowa |
| Na₂ malate | ex Aldrich |
| Na lactate | ex Purac |
| PVC | Solvin 268 RP or Solvic 264 ex Solvay |

### Procedure:

A composition of in total about 150 g as given in the Tables below was mixed by hand and subsequently homogenised and gelled on a rolling mill with a friction of 10%, meaning that one roll runs 10% faster than the other roll, during 3-5 minutes at 165-200°C. Specific times and temperatures are given in the examples. After the milling time, the samples were removed as sheets of about 1 mm thickness. Subsequently, the thermal stability of the sheets was determined by testing strips that were cut directly from the sheet, or the sheets were cut into small pieces that were subsequently moulded in a conventional way using a plate press, a mould of 200x200x3 mm being used, and a temperature of 190 or 200°C. The moulding process included putting the mould between two plates in the heated press, closing the press (no pressure applied) and heating the whole for 3 minutes, then applying a pressure of 300 bar for a period of 6 minutes, followed by cooling the press (using cold water), release of the pressure, and opening of the mould.
In the former thermal stability test, test strips of 15 mm x 250 mm were cut from the sheets and placed in a Mathis Thermotester Type LTE-T at 185°C. The strips were gradually pulled from the thermotester in the usual way. The stability of the samples was determined visually by either checking the time at which degradation occurred or by determining the colour of the PVC that had been in the oven for a certain period of time, as detailed in the examples.
In the latter test, the performance of the stabiliser system was evaluated by checking the colour of the resulting pressed plate of PVC.
A colour scale ranging from black (worst), brown, dark orange, dark yellow, yellow, cream, to off-white (best) was used to classify the colour of the PVC after the test.

### Example 1 and Comparative Examples 1a-1b

The ingredients mixed to produce a flexible-grade PVC were:

| Example | 1 | 1a | 1b |
|---|---|---|---|
| Solvic 264 | 100 | 100 | 100 |
| dioctyl phthalate | 45 | 45 | 45 |
| Lankroflex E 2307 | 3 | 3 | 3 |
| stearic acid | 0.5 | 0.5 | 0.5 |
| uracil | 0.15 | 0.15 | none |
| sodium lactate | 0.5 | none | 0.5 |
| The amounts are given in parts by weight. | | | |

The mixture was made into a sheet by milling for 3 minutes at 162°C.
After having been in the thermotester at 185°C for 35 minutes, the product of Example 1a was orange and the product of Example 1 b was dark orange, while the product of Example 1 was pale yellow. Clearly, the stabiliser system according to the invention was active at said temperatures in said PVC formulation.

### Examples 2 and 3 and Comparative Examples 2a-c

The ingredients mixed to produce a semi-rigid-grade PVC were:

| Example | 2 | 3 | 2a | 2b | 2c |
|---|---|---|---|---|---|
| Solvic 264 | 100 | 100 | 100 | 100 | 100 |
| dioctyl phthalate | 27 | 27 | 27 | 27 | 27 |
| TiO2 pigment | 5 | 5 | 5 | 5 | 5 |
| stearic acid | 0.5 | 0.5 | 0.5 | 0.5 | 0.5 |
| uracil | 0.15 | 0.15 | 0.15 | none | none |
| sodium lactate | 0.5 | none | none | 0.5 | none |
| disodium malate | none | 0.5 | none | none | 0.5 |
| The amounts are given in parts by weight. | | | | | |

The mixture was made into a sheet by milling for 3 minutes at 165°C.
In the thermotester at 185°C, the product of Comparative Example 2a started degrading after 27 minutes and the product of Example 2b before 45 minutes had elapsed, the exact time being difficult to determine due to strong discoloration of the polymer, and the product of Example 2c started degrading after 36 minutes. The products of Examples 2 and 3 did not degrade until they had been in the oven for 54 and 72 minutes, respectively.
Also, the colour after 36 minutes in the thermotester was determined. The products of Examples 2 and 3 were cream and pale cream in colour, respectively, whereas the products of Examples 2a, 2b, and 2c were purple, brown, and pale brown, respectively.

### Examples 4 and 5 and Comparative Examples 4a and 4b

The ingredients mixed to produce a rigid-grade PVC were:

| Example | 4 | 5 | 4a | 4b |
|---|---|---|---|---|
| Solvin 268 RP | 100 | 100 | 100 | 100 |
| chalk | 2 | 2 | 2 | 2 |
| Paraloid K120N process aid | 2 | 2 | 2 | 2 |
| calcium stearate | 0.3 | 0.3 | 0.3 | 0.3 |
| waxes and lubricants* | 0.55 | 0.55 | 0.55 | 0.55 |
| TiO₂ pigment | 0.2 | 0.2 | 0.2 | 0.2 |
| sodium lactate | 0.5 | 0.5 | 0.5 | none |
| β-amino crotonate | none | 0.4 | none | none |
| uracil | 0.15 | none | none | 0.15 |
| hydrotalcite | none | none | none | 0.5 |
| The amounts are given in parts by weight. | | | | |

| | | | | |
|---|---|---|---|---|
| * = the types and amounts of waxes used are not critical. In these Examples, 0.1 phr of Paraflint® H1 ex Schuemann, 0.2 phr of Luwax®A ex BASF, 0.1 phr of Loobwax 0597 ex Honeywell, 0.05 phr Luwax®OA2, and 0.1 phr of Paraffin®5603 ex Schumann were used. | | | | |

The mixture was made into a sheet by milling for 3 minutes at 190°C.
The sheets were evaluated in a thermotester at 185°C. The colour of the products after 5 and 30 minutes was recorded and gave the following results:

| Example | 4 | 5 | 4a | 4b |
|---|---|---|---|---|
| Colour after 5 minutes | pale cream | pale cream | brown | cream |
| Colour after 30 minutes | yellow | pale orange | dark brown | dark yellow |

This shows that the stabilising system according to the invention has a comparable performance to that of conventional stabilising systems based on uracil and hydrotalcites.

### Examples 6-9 and Comparative Example 6a

In Example 6 a rigid PVC formulation was prepared by mixing:

| | |
|---|---|
| Solvin 268 RP | 100 |
| chalk | 2 |
| calcium stearate | 0.5 |
| waxes and lubricants** | 0.75 |
| TiO₂ pigment | 0.2 |
| sodium lactate | 1 |
| dicyanodiamide | 0.5 |
| Na perchlorate | 0.05 |
| uracil | 0.15 |

| | |
|---|---|
| ** = the types and amounts of waxes used are not critical. In these Examples, 0.25 phr of Paraflint® H1 ex Schuemann, 0.25 phr of stearic acid, and 0.25 phr of Paraffin®5603 ex Schumann were used. | |

After mixing, the mixture was milled at 200°C for 5 minutes and moulded using pressing plates at 200°C for 6 minutes. A cream-coloured pressed plate resulted.

In Comparative Example 6a, the same recipe was used, except that the Na lactate was omitted. The product already gave problems on the mill due to degradation and a pressed plate was black.

In Examples 7, 8, and 9 the perchlorate, the uracil, and the uracil and the perchlorate both were omitted, respectively. The pressed plates were dark yellow, dark yellow, and brown, respectively. Similar tests where the pressed plate was made using a temperature of 190°C instead of 200°C were all acceptable in colour (off-white to yellow).
These results show that products of the preferred embodiment with oxidising agents give a superior performance under very demanding processing conditions.

### Example 10 and Comparative Example 10a-c

In Example 10 a rigid PVC formulation was prepared by mixing:

| | | | | |
|---|---|---|---|---|
| Example | 10 | 10a | 10b | 10c |
| Solvin 268 RP | 100 | 100 | 100 | 100 |
| chalk | 2 | 2 | 2 | 2 |
| process aid | 2 | 2 | 2 | 2 |
| calcium stearate | 0.3 | 0.3 | 0.3 | 0.3 |
| waxes and lubricants | 0.55 | 0.55 | 0.55 | 0.55 |
| TiO₂ pigment, | 0.2 | 0.2 | 0.2 | 0.2 |
| uracil | 0.15 | 0.15 | 0.15 | 0.15 |
| sodium lactate | 0.50 | - | - | - |
| potassium saccharate | - | 0.50 | - | - |
| sodium gluconate | - | - | 0.50 | - |
| - = none | | | | |

After mixing, the mixture was milled at 200°C for 5 minutes to form a sheet with the following colour.

| Example | 10 | 10a | 10b | 10c |
|---|---|---|---|---|
| Colour | pale cream | brown | pale brown | dark brown |

This shows that stabilising systems comprising hydroxyacids with 4 or 5 OH groups (as in Examples 10a and 10b, respectively) are not as active.

### Example 11 and Comparative Examples 11a-d

The ingredients mixed to produce a flexible-grade PVC were:

| Example | 11 | 11a | 11b | 11c | 11d |
|---|---|---|---|---|---|
| Solvic 264 PC | 100 | 100 | 100 | 100 | 100 |
| dioctyl phthalate | 45 | 45 | 45 | 45 | 45 |
| epoxidised fatty acid ester | 3 | 3 | 3 | 3 | 3 |
| stearic acid | 0.5 | 0.5 | 0.5 | 0.5 | 0.5 |
| uracil | 0.15 | 0.15 | 0.15 | 0.15 | 0.15 |
| sodium lactate | 0.5 | - | - | - | - |
| sodium propionate | - | - | 0.5 | - | - |
| sodium 12-hydroxy stearate | - | - | - | 0.5 | 1.44 |

The mixture was made into a 0.6 mm sheet by milling for 5 minutes at 165°C.
After 48 minutes in the thermotester at 185°C for the following Yellowness Index (in accordance with to ASTM 1925) was measured.

| | | | | | |
|---|---|---|---|---|---|
| Example | 11 | 11a | 11b | 11c | 11d |
| Yellowness Index | 80 | 115 | 135 | 160 | 165 |

Clearly, products without OH groups (Examples 11a and 11b) and products with a hydroxy fatty acid residue are not active.

### Examples 12-13 and Comparative Examples 12a-c

The ingredients mixed to produce a flexible-grade PVC were:

| Example | 12 | 13 | 12a | 12b | 12c |
|---|---|---|---|---|---|
| Solvic 264 PC | 100 | 100 | 100 | 100 | 100 |
| dioctyl phthalate | 25 | 25 | 25 | 25 | 25 |
| epoxidised fatty acid ester | 3 | 3 | 3 | 3 | 3 |
| stearic acid | 0.5 | 0.5 | 0.5 | 0.5 | 0.5 |
| TiO₂ pigment | 5 | 5 | 5 | 5 | 5 |
| uracil | 0.15 | 0.15 | - | 0.15 | - |
| sodium lactate | 0.5 | 0.5 | 0.5 | - | 0.5 |
| sodium perchlorate | - | 0.03 | - | 0.03 | 0.03 |

The mixture was made into a 0.6 mm sheet by milling for 5 minutes at 165°C. After 25 minutes in the thermotester at 200°C the colour of the test strips was as follows:

| Example | 12 | 13 | 12a | 12b | 12c |
|---|---|---|---|---|---|
| Colour | pale cream | pale cream | pale brown | pale brown | brown |

The product of Example 13 was slightly lighter in colour than the product of Example 12. The product of Comparative Example 12b was of poorer quality than the product of Comparative Example 12a.

## Claims

1. Stabiliser system comprising at least one hydroxycarboxylic acid salt with fewer than 4 hydroxy groups and fewer than 10 carbon atoms, at least one colour stabiliser, and an optional oxidising agent.

2. A stabiliser system according to claim 1 comprising at least two colour stabilisers, one of them containing nitrogen, said nitrogen-containing stabiliser preferably being dicyandiamide.

3. A stabiliser system according to claim 1 or 2 further comprising one or more conventional adjuvants for processing PVC.

4. A stabiliser system according to any one of the preceding claims comprising 0.05-70 %w/w of one or more hydroxycarboxylic acid salts, 0.02-40 %w/w of one or more colour stabilisers, 0-5 %w/w of one or more oxidising agents, and 0 - 94 %w/w of one or more adjuvants, up to a total of 100 %w/w.

5. Process to make a stabilised (co)polymer, preferably a vinyl chloride-containing (co)polymer, comprising the step of compounding a stabilising effective amount of a stabiliser system according to any one of claims 1-4 with said (co)polymer.

6. Stabilised (co)polymer comprising an effective amount of a stabiliser system according to any one of claims 1-4.

7. A stabilised (co)polymer according to claim 6 comprising 0.05-9 phr of one or more salts of a hydroxyacid with fewer than 4 hydroxy groups and fewer than 10 carbon atoms, 0.01-5 phr of one or more colour stabilisers, and 0-5 phr of one or more oxidising agents.

8. A process to form finished articles by processing the stabilised (co)polymer of claim 6 or 7.

## Patentansprüche

1. Stabilisatorsystem, das wenigstens ein Salz einer Hydroxycarbonsäure mit weniger als 4 Hydroxygruppen und weniger als 10 Kohlenstoffatomen, wenigstens einen Farbstabilisator und gegebenenfalls ein Oxidationsmittel umfasst.

2. Stabilisatorsystem gemäß Anspruch 1, das wenigstens zwei Farbstabilisatoren umfasst, wobei einer derselben Stickstoff enthält, und der stickstoffhaltige Stabilisator vorzugsweise Dicyandiamid ist.

3. Stabilisatorsystem gemäß den Ansprüchen 1 oder 2, das weiterhin einen oder mehrere konventionelle Hilfsstoffe zur Verarbeitung von PVC enthält.

4. Stabilisatorsystem gemäß irgendeinem - der vorhergehenden Ansprüche, umfassend 0,05 Gew.-% bis 70 Gew.-% eines oder mehrerer Salze von Hydroxycarbonsäuren, 0,02 Gew.-% bis 40 Gew.-% eines oder mehrerer Farbstabilisatoren, 0 Gew.-% bis 5 Gew.-% eines oder mehrerer Oxidationsmittel und 0 Gew.-% bis 94 Gew.-% eines oder mehrerer Hilfsstoffe, bis zu insgesamt 100 Gew.-%.

5. Verfahren zur Herstellung eines stabilisierten (Co)polymers, vorzugsweise eines Vinylchlorid-enthaltenden (Co)polymers, umfassend den Schritt des Kompoundierens einer wirksamen stabilisierenden Menge eines Stabilisatorsystems gemäß irgendeinem der Ansprüche 1 bis 4 mit dem (Co)polymer.

6. Stabilisiertes (Co)polymer, umfassend eine wirksame Menge eines Stabilisatorsystems gemäß irgendeinem der Ansprüche 1 bis 4.

7. Stabilisiertes (Co)polymer gemäß Anspruch 6, umfassend 0,05 phr bis 9 phr eines oder mehrerer Salze einer Hydroxysäure mit weniger als 4 Hydroxygruppen und weniger als 10 Kohlenstoffatomen, 0,01 phr bis 5 phr eines oder mehrerer Farbstabilisatoren und 0 phr bis 5 phr eines oder mehrerer Oxidationsmittel.

8. Verfahren zu Herstellung von fertigen Artikeln durch die Verarbeitung des stabilisierten (Co)polymers gemäß den Ansprüchen 6 und 7.

## Revendications

1. Système stabilisateur comprenant au moins un sel d'acide hydroxycarboxylique avec moins de 4 groupes hydroxy et moins de 10 atomes de carbone, au moins un stabilisateur de couleur, et éventuellement un oxydant.

2. Système stabilisateur selon la revendication 1, comprenant au moins deux stabilisateurs de couleur, l'un d'entre eux contenant de l'azote, ledit stabilisateur contenant de l'azote étant de préférence du dicyandiamide.

3. Système stabilisateur selon la revendication 1 ou 2, comprenant en outre un ou plusieurs adjuvants traditionnels pour traiter le PVC.

4. Système stabilisateur selon l'une quelconque des revendications précédentes, comprenant de 0,05 à 70 % en poids d'un ou de plusieurs sels d'acide hydroxycarboxylique, de 0,02 à 40 % en poids d' un ou de plusieurs stabilisateurs de couleur, de 0 à 5 % en poids d'un ou de plusieurs oxydants et de 0 à 94 % en poids d'un ou de plusieurs adjuvants, jusqu'à un total de 100 % en poids.

5. Processus pour produire un (co) polymère stabilisé, de préférence un (co)polymère contenant du chlorure de vinyle, comprenant l'étape qui consiste à combiner une quantité stabilisante efficace d'un système stabilisateur selon l'une quelconque des revendications 1 à 4 avec ledit (co) polymère.

6. (Co)polymère stabilisé comprenant une quantité efficace d'un système stabilisateur selon l'une quelconque des revendications 1 à 4.

7. (Co)polymère stabilisé selon la revendication 6, comprenant de 0,05 à 9 phr, d'un ou plusieurs sels d'un hydroxyacide avec moins de 4 groupes hydroxy et moins de 10 atomes de carbone, de 0,01 à 5 phr, d'un ou de plusieurs stabilisateurs de couleur et de 0 à 5 phr, d'un ou de plusieurs oxydants.

8. Processus pour former des produits finis en traitant le (co)polymère stabilisé de la revendication 6 ou 7.
